# EUROPÄISCHE PATENTANMELDUNG

(11) **EP 4 082 832 A1**
(43) Veröffentlichungstag der Anmeldung: **02.11.2022**
(21) Anmeldenummer: 22162286.3
(22) Anmeldetag: 15.03.2022
(51) Int. Cl.: B60Q 1/04, B60Q 1/26

(54) **VORRICHTUNG, KOMPONENTE UND KRAFTFAHRZEUG**

(30) Priorität: 27.04.2021 DE 102021110781
(71) Anmelder: Marelli Automotive Lighting Reutlingen (Germany) GmbH, 72762 Reutlingen (DE)
(72) Erfinder: Wezel, Thomas, 72768 Reutlingen (DE); Schieting, Philipp, 72108 Rottenburg (DE)
(74) Vertreter: DREISS Patentanwälte PartG mbB

(57) **Zusammenfassung**

Es wird eine Vorrichtung (100) zur Befestigung einer Komponente eines Kraftfahrzeugs, insbesondere einer Beleuchtungseinrichtung (400) des Kraftfahrzeugs, an dem Kraftfahrzeug bereitgestellt. Ein komponentenseitiger Aufnahmeabschnitt (102) ist zur Aufnahme eines Gleitelements (104) ausgebildet. Das Gleitelement (104) ist zu dem komponentenseitigen Aufnahmeabschnitt (102) entlang einer Gleitachse (G) bewegbar, wobei das Gleitelement (104) lotrecht zu der Gleitachse (G) zu dem komponentenseitigen Aufnahmeabschnitt (102) festgelegt ist.

## Beschreibung

Die vorliegende Anmeldung beschreibt Fortschritte im Bereich der Befestigung von Automobilkomponenten, insbesondere Beleuchtungseinrichtungen für Kraftfahrzeuge.

Die der Erfindung zugrundeliegende Aufgabe besteht beispielsweise darin, eine Komponente mit wenigstens einem Bewegungsfreiheitsgrad aber dennoch fest mit der Karosserie eines Kraftfahrzeugs zu verbinden.

Die der Erfindung zugrundeliegende Aufgabe wird durch eine Vorrichtung gemäß dem Anspruch 1, eine Komponente gemäß einem weiteren Anspruch sowie durch ein Kraftfahrzeug gemäß einem anderen Anspruch gelöst. Vorteilhafte Weiterbildungen finden sich in der nachfolgenden Beschreibung, den Unteransprüchen sowie in der Zeichnung.

Ein erster Aspekt der Beschreibung betrifft eine Vorrichtung zur Befestigung einer Komponente eines Kraftfahrzeugs, insbesondere einer Beleuchtungseinrichtung des Kraftfahrzeugs, an dem Kraftfahrzeug. Diese Vorrichtung umfasst: einen komponentenseitigen Aufnahmeabschnitt zur Aufnahme eines Gleitelements; und das Gleitelement, wobei das Gleitelement zu dem komponentenseitigen Aufnahmeabschnitt entlang einer Gleitachse bewegbar ist, und wobei das Gleitelement lotrecht zu der Gleitachse zu dem komponentenseitigen Aufnahmeabschnittfestgelegt ist.

Durch den Einsatz des Gleitstücks, das durch den Aufnahmeabschnitt in eine Richtung gleiten kann, wird eine Verspannung eines Gehäuses und der weiteren Bauteile im Scheinwerfer, insbesondere auch der Lichtmodule und deren Aufhängung, und weiterer Verstellteile reduziert. Solche Verspannungen, entstehen z.B. bereits bei der Montage des Scheinwerfers ins Fahrzeug, während dem Fahrbetrieb oder durch thermische Dehnungen von unterschiedlichen Materialien. Dies hat insbesondere Vorteile bei der Hell-Dunkel-Grenzen-Prüfung, bei der durch die bereitgestellte Vorrichtung vermieden wird, dass sich Module im Scheinwerfer aufgrund der thermischen Verspannung des Gehäuses im Fahrzeug, verschieben. Eine Verschiebung des Lichtbilds während der Fahrt wird dadurch ebenfalls verringert. Die thermische Ausdehnung und Verspannung kann über das Gleitstück und dessen Verschiebebereich in der gewünschten Richtung abgeleitet werden. Das Schiebeelement ist am Fahrzeug bzw. dessen Karosserie fixiert und das Scheinwerfergehäuse gleitet auf diesem Schiebelement in gewünschter Richtung, je nach Orientierung der Gleitachse.

Ein vorteilhaftes Beispiel zeichnet sich dadurch aus, dass wenigstens ein erster Anschlagabschnitt des komponentenseitigen Aufnahmeabschnitts und wenigstens ein zweiter Anschlagabschnitt des Gleitelements die Bewegung des Gleitelements entlang der Gleitachse begrenzen.

Vorteilhaft wird damit eine definierte Gleitdistanz bereitgestellt. Gleichzeitig wird das Gleitelement verliersicher durch den Aufnahmeabschnitt aufgenommen.

Ein vorteilhaftes Beispiel zeichnet sich dadurch aus, dass wenigstens ein lotrecht zur Gleitachse von dem Gleitelement abragender Vorsprung zumindest abschnittsweise in eine zugeordnete Durchgangsöffnung des komponentenseitigen Aufnahmeabschnitts eintaucht.

Vorteilhaft wird die Bewegung des Gleitelements durch den Vorsprung eintaucht dadurch begrenzt, dass der Vorsprung bei der Bewegung jeweils eine der sich gegenüberliegenden Innenwände kontaktiert. So wird das Gleitelement verliersicher in dem komponentenseitigen Aufnahmeabschnitt gehalten.

Ein vorteilhaftes Beispiel zeichnet sich dadurch aus, dass der Vorsprung des Gleitelements eine Einführschräge umfasst.

Vorteilhaft lässt sich das Gleitelement einfacher montieren, da die Einführschräge einen Steg, der die Durchgangsöffnung begrenzt, beim Einführen des Gleitelements in den komponentenseitigen Aufnahmeabschnitt wegdrückt.

Ein vorteilhaftes Beispiel zeichnet sich dadurch aus, dass die Vorrichtung umfasst: mindestens einen karosserieseitigen Befestigungsabschnitt, wobei ein Aufnahmeabschnitt des Gleitelements den karosserieseitigen Befestigungsabschnitt wenigstens in einer gedachten Ebene, durch die die Gleitachse verläuft, starr zu dem Gleitelement festlegt.

Der karosserieseitige Befestigungsabschnitt erlaubt es damit, die Gleitbewegung der Komponente entlang der Gleitachse durchzuführen. In einem ersten Beispiel liegt der karosserieseitige Befestigungsabschnitt das Gleitelement starr zu der Karosserie fest. In einem weitergehenden Beispiel kann der karosserieseitige Befestigungsabschnitt mit weiteren toleranzausgleichenden Elementen oder Justageelementen an der Karosserie des Kraftfahrzeugs befestigt werden.

Ein weiterer Aspekt der Beschreibung betrifft eine Komponente eines Kraftfahrzeugs, insbesondere eine Beleuchtungseinrichtung des Kraftfahrzeugs, umfassend die Vorrichtung gemäß dem ersten Aspekt.

Ein vorteilhaftes Beispiel zeichnet sich dadurch aus, dass die Gleitachse im Wesentlichen parallel zur Fahrzeuglängsachse, insbesondere zur Fahrtrichtung, ist.

In die beiden anderen Richtungen lotrecht zur Fahrtrichtung ist eine Kraftübertragung zwischen Karosserie und Komponente gegeben. Vorteilhaft ist diese Orientierung der Gleitachse besonders in Bezug auf die stabile Lage einer Hell-Dunkel-Grenze eines Kraftfahrzeugscheinwerfers. Der Scheinwerfer kann Spannungen, die sich beispielsweise durch thermische Längenänderungen des Materials ergeben, über das Gleitelement abbauen.

Ein vorteilhaftes Beispiel zeichnet sich dadurch aus, dass die wenigstens eine Vorrichtung in Bezug zu dem Kraftfahrzeug nach innen gerichtet angeordnet ist.

Vorteilhaft wird dadurch im Inneren des Kraftfahrzeugs ein Spannungsabbau der Komponente und damit eine geringe Bewegung der Komponente ermöglicht. Der nach außen sichtbare Teil beispielsweise eines Kraftfahrzeugscheinwerfers hingegen verbleibt an seiner Position.

Ein vorteilhaftes Beispiel zeichnet sich dadurch aus, dass wenigstens eine weitere Vorrichtung zur Befestigung der Komponente in Bezug zu dem Kraftfahrzeug nach außen gerichtet angeordnet ist, und wobei die weitere Vorrichtung zur entlang der Gleitachse starren Befestigung der Komponente an dem Kraftfahrzeug ausgebildet ist.

Ein dritter Aspekt der Beschreibung ist auf ein Kraftfahrzeug gerichtet, welches die Komponente gemäß dem zweiten Aspekt umfasst. Vorteilhaft ist das Gleitelement zu einer Karosserie des Kraftfahrzeugs im Wesentlichen starr festgelegt.

In der Zeichnung zeigen:
- Figur 1: eine perspektivische Explosionsansicht einer Vorrichtung zum Befestigen einer Komponente eines Kraftfahrzeugs;
- Figur 2: eine Schnittansicht der Vorrichtung;
- Figur 3: eine perspektivische Ansicht eines Aufnahmeabschnitts; und
- Figur 4: in schematischer Form einen Kraftfahrzeugscheinwerfer.

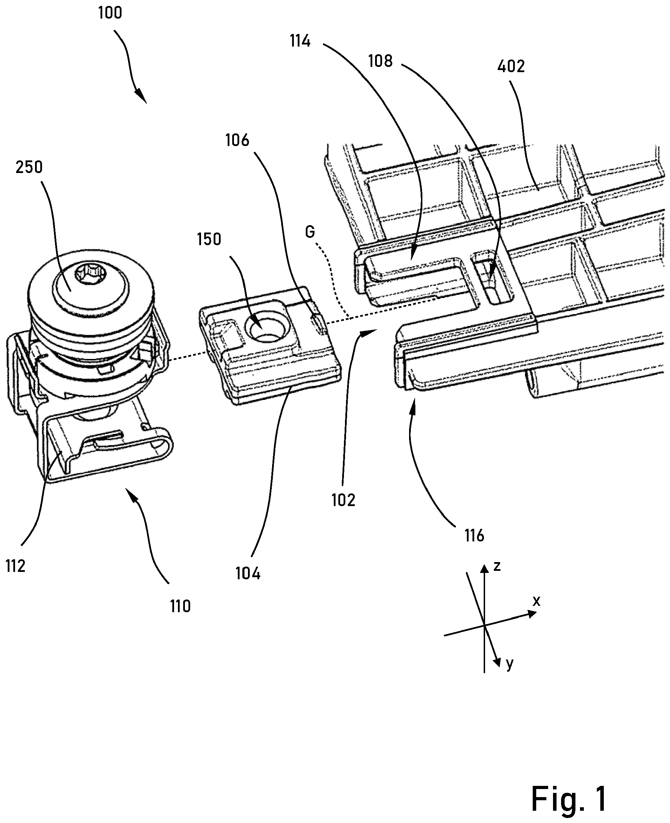

Figur 1 eine perspektivische Explosionsansicht einer Vorrichtung 100 zum Befestigen einer Komponente eines Kraftfahrzeugs. Unter der Komponente des Kraftfahrzeugs wird insbesondere eine Beleuchtungseinrichtung des Kraftfahrzeugs verstanden. Die Vorrichtung 100 umfasst einen komponentenseitigen Aufnahmeabschnitt 102 zur Aufnahme eines Gleitelements 104. Der komponentenseitige Aufnahmeabschnitt 102 ist beispielsweise an ein Gehäuse 402 der Beleuchtungseinrichtung angeformt oder in anderer Weise starr mit dem Gehäuse 402 verbunden. Das Gleitelement 104 ist zu dem komponentenseitigen Aufnahmeabschnitt 102 entlang einer Gleitachse G bewegbar. Das Gleitelement 104 ist lotrecht zu der Gleitachse G zu dem komponentenseitigen Aufnahmeabschnitt 102 formschlüssig festgelegt. Insbesondere nimmt der Aufnahmeabschnitt 102 das Gleitelement 104 teilweise auf.

Der Aufnahmeabschnitt 102 ist in einer xy-Ebene U-förmig ausgebildet und umfasst zwei in einem yz-Schnitt U-förmige Aufnahmeschienen. In die Aufnahmeschienen greifen laterale, sich gegenüberliegende Abschnitte des Gleitelements 104 ein und erlauben die Verschieblichkeit des Gleitelements 104 und des Aufnahmeabschnitts 102 entlang der Gleitachse G zueinander. Das Gleitelement 104 ist plattenförmig ausgestaltet.

Über das Gleitelement 104 und den komponentenseitigen Aufnahmeabschnitt 102 wird mindestens ein Befestigungspunkt für den Scheinwerfer bzw. die Komponente in eine Richtung gleitend gestaltet. Das Gleitelement 104 wird in die Aufnahme 102 am Scheinwerfergehäuse eingeschoben. Anschließend, bzw. bei der Montage des Scheinwerfers ins Fahrzeug, wird eine Befestigungsvorrichtung 110 zumindest teilweise auf das Gleitstück 104 bzw. die Aufnahme 102 aufgeschoben. Nach dem Verschrauben der Befestigungsvorrichtung 110 ist diese sowie das Gleitelement 104 fest mit dem Fahrzeug verschraubt. Das Gehäuse, bzw. die Aufnahme kann sich innerhalb eines festgelegten Bereichs in eine Richtung zum Gleitelement 104 bewegen.

Die Befestigungsvorrichtung 110 umfasst ein klammerartiges Blech 112, welche äußere Oberflächen 114 und 116 des Aufnahmeabschnitts 102 umgreifen. Das Blech 112 umfasst Durchgangsöffnungen, um einen Befestigungsabschnitt 250 der karosserieseitigen Befestigungsvorrichtung 110 abschnittsweise hindurchzuführen. Die Befestigungsvorrichtung 110 legt den Aufnahmeabschnitt in z-Richtung formschlüssig zu der Karosserie des Kraftfahrzeugs fest. Die Befestigungsvorrichtung 110 legt das Gleitelement 104 formschlüssig in einer Ebene des Gleitelements 104 fest. Das Gleitelement 104 besitzt bezüglich des Aufnahmeabschnitts 102 nur einen einzigen Freiheitsgrad, die Bewegung entlang der Gleitachse G.

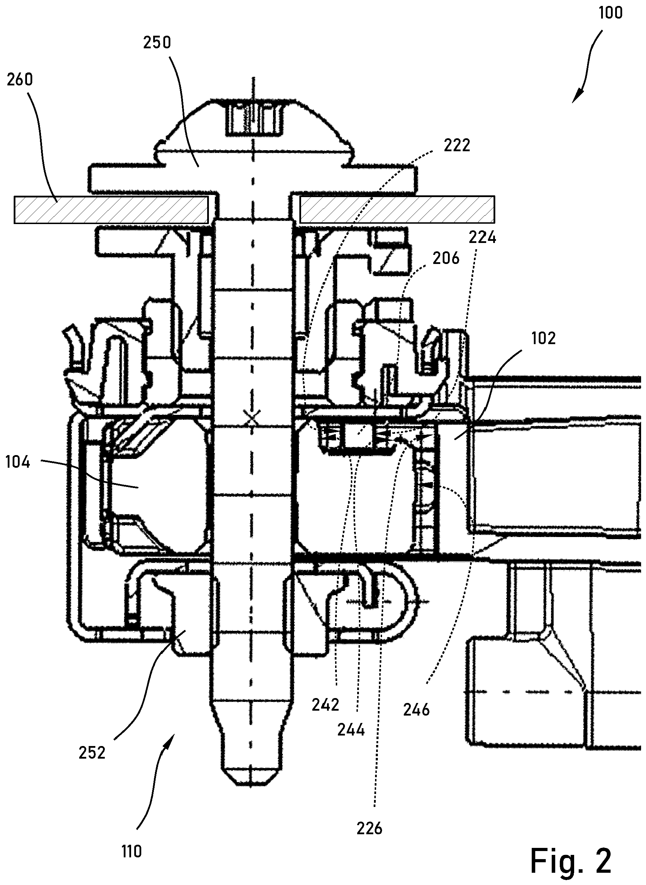

Figur 2 zeigt eine Schnittansicht der Vorrichtung 100. Wenigstens ein erster Anschlagabschnitt 222, 224, 226 des komponentenseitigen Aufnahmeabschnitts 102 und wenigstens ein zweiter Anschlagabschnitt 242, 244, 246 des Gleitelements 104 begrenzen die Bewegung des Gleitelements 104 entlang der Gleitachse G relativ zu dem Aufnahmeabschnitt 102.

Wenigstens ein lotrecht zur Gleitachse G von dem Gleitelement 104 abragender Vorsprung 106 taucht zumindest abschnittsweise in eine zugeordnete Durchgangsöffnung 108 des komponentenseitigen Aufnahmeabschnitts 102 ein und stellt beispielsweise den Anschlagabschnitt 244 bereit. Der Vorsprung 106 des Gleitelements 104 umfasst eine Einführschräge, deren Fläche in einer gedachten Verlängerung mit der Gleitachse G einen Winkel zwischen 20° und 70°, insbesondere zwischen 30° und 60°, einschließt, umfasst. Beim Einbringen des Gleitelements 104 in den Aufnahmeabschnitt 102 drückt der Vorsprung 106, insbesondere die Einführschräge, auf einen Steg 206 des Aufnahmeabschnitts 102.

Der karosserieseitige Befestigungsabschnitt 250, vorliegend in Form einer Schraube, durchstößt eine Durchgangsöffnung gemäß dem Aufnahmeabschnitt 150 des Gleitelements 104, welche sich lotrecht zur Gleitachse G erstreckt. Der Befestigungsabschnitt 250 ist also durch die Durchgangsöffnung im Sinne des Aufnahmeabschnitts 150 geführt. Gemeinsam mit einer Überwurfmutter 252, deren Innengewinde in ein Außengewinde des Befestigungsabschnitts 250 eingreift, legt der Befestigungsabschnitt 250 das Gleitelement 104 zu der Karosserie 260 fest. Der karosserieseitige Befestigungsabschnitt 250 legt das Gleitelement 104 wenigstens in einer gedachten Ebene, durch die die Gleitachse G verläuft, starr zu der Karosserie 250 fest. Der Befestigungsabschnitt 250 ist hierzu durch eine Durchgangsöffnung der Karosserie 260 geführt.

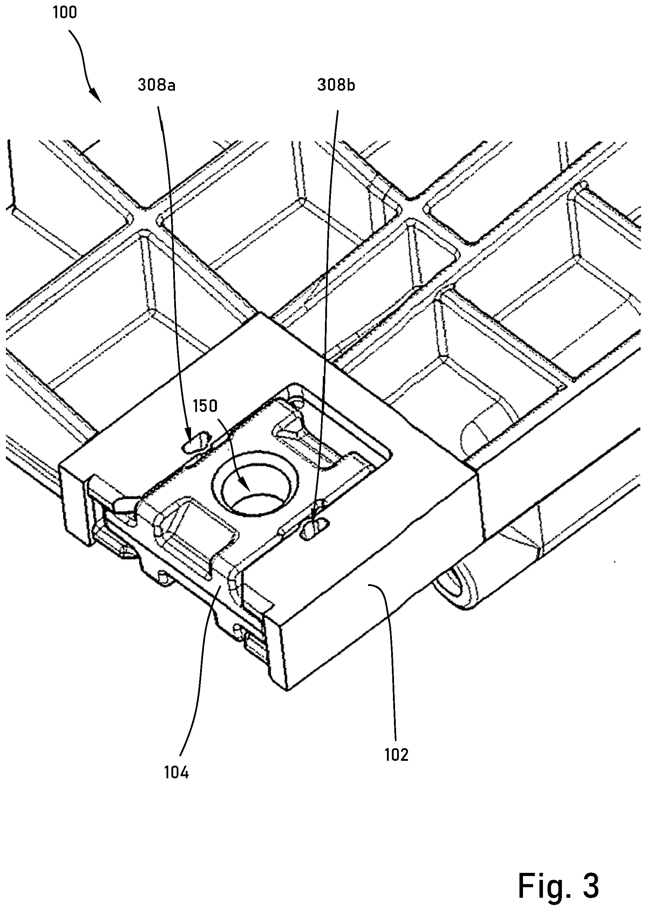

Figur 3 zeigt eine perspektivische Ansicht des in den Aufnahmeabschnitt 102 eingebrachten Gleitelements 104. Im Unterschied zu den Figuren 1 und 2 umfasst der Aufnahmeabschnitt 102 im Bereich der Aufnahmeschienen sich gegenüberliegende Ausnehmungen 308a und 308b, die langlochartig parallel zur Gleitachse G verlaufen. In die Ausnehmungen 308a und 308b greifen - in Figur 3 nicht sichtbar - jeweilige vom Gleitelement 104 abragende Vorsprünge ein. Eine Vorzugspositionierung des Gleitelements 104 in Bezug zu dem Aufnahmeabschnitt wird über beispielhaft gezeigte nach innen zeigende Aussparungen der Ausnehmungen 308a und 308b erreicht, in welche der jeweilige Vorsprung des Gleitelements 104 in unverspannter Form eingreift.

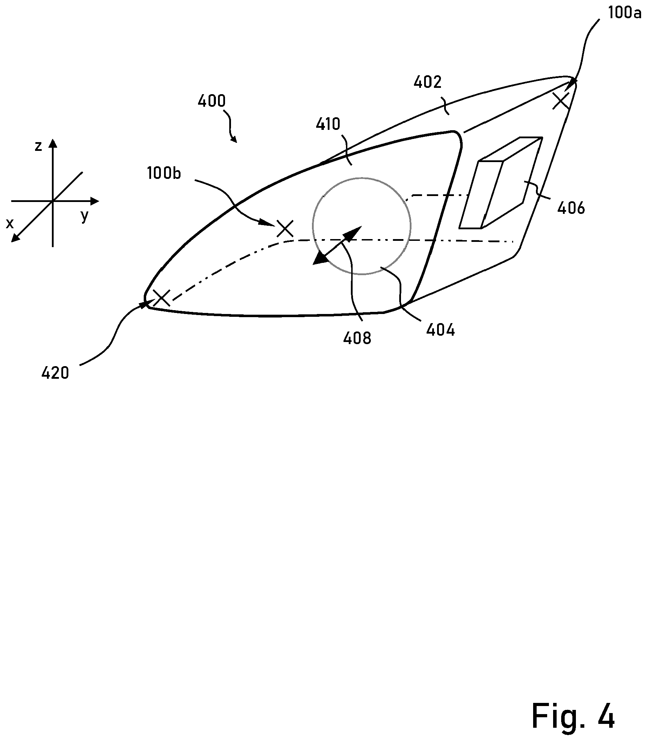

Figur 4 zeigt eine Beleuchtungseinrichtung 400 in Form eines schematisch dargestellten Scheinwerfers für ein Kraftfahrzeug. Selbstverständlich kann die Beleuchtungseinrichtung 400 auch eine Heckleuchte, ein Blinker oder eine andersgeartete Beleuchtungseinrichtung für ein Kraftfahrzeug sein. Innerhalb des Gehäuses 402 befindet sich das Lichtmodul 404. Das Lichtmodul 404 wird von dem Steuergerät 406 derart betrieben, dass das Lichtmodul 404 eine Lichtverteilung 408 abstrahlt. Eine Lichtaustrittsöffnung des Gehäuses 402 ist durch eine transparente Abdeckscheibe 410 verschlossen, durch welche die Lichtverteilung 408 durchtritt.

Die Gleitachse G des Gleitelements auf den Figuren 1 bis 3 verläuft im Wesentlichen parallel zur Fahrzeuglängsachse, insbesondere zur Fahrtrichtung.

An Befestigungspunkten 100a und 100b sind die zuvor mit dem Bezugszeichen 100 bezeichneten Vorrichtungen angeordnet, welche eine Bewegung des Gehäuses 402 entlang der x-Achse, also der Längsachse des Kraftfahrzeugs, erlauben. Die Befestigungspunkte 100a, 100b sind nach innen gerichtet angeordnet.

An einem Befestigungspunkt 420, der in Bezug zu dem Fahrzeug nach außen gerichtet ist, ist die Beleuchtungseinrichtung mittels einer weitere Vorrichtung in Bezug zu dem Kraftfahrzeug bzw. dessen Karosserie starr befestigt. Der Befestigungspunkt 420 ist nach außen gerichtet. Die gezeigte Konfiguration der drei Befestigungspunkte 110a, 110b und 420 stellt ein vorteilhaft verteiltes Kräftedreieck bereit.

## Patentansprüche

1. Eine Vorrichtung (100) zur Befestigung einer Komponente eines Kraftfahrzeugs, insbesondere einer Beleuchtungseinrichtung (400) des Kraftfahrzeugs, an dem Kraftfahrzeug, umfassend:
einen komponentenseitigen Aufnahmeabschnitt (102) zur Aufnahme eines Gleitelements (104); und
das Gleitelement (104), wobei das Gleitelement (104) zu dem komponentenseitigen Aufnahmeabschnitt (102) entlang einer Gleitachse (G) bewegbar ist, und wobei das Gleitelement (104) lotrecht zu der Gleitachse (G) zu dem komponentenseitigen Aufnahmeabschnitt (102) festgelegt ist.

2. Die Vorrichtung (100) gemäß dem Anspruch 1, wobei wenigstens ein erster Anschlagabschnitt (222; 224; 226) des komponentenseitigen Aufnahmeabschnitts (102) und wenigstens ein zweiter Anschlagabschnitt (242; 244; 246) des Gleitelements (104) die Bewegung des Gleitelements (104) entlang der Gleitachse (G)begrenzen.

3. Die Vorrichtung (100) gemäß einem der vorigen Ansprüche, wobei wenigstens ein lotrecht zur Gleitachse (G) von dem Gleitelement (104) abragender Vorsprung (106) zumindest abschnittsweise in eine zugeordnete Durchgangsöffnung (108; 308a, 308b) des komponentenseitigen Aufnahmeabschnitts (102) eintaucht.

4. Die Vorrichtung (100) gemäß dem Anspruch 3, wobei der Vorsprung (106) des Gleitelements (104) eine Einführschräge umfasst.

5. Die Vorrichtung (100) gemäß einem der vorigen Ansprüche umfassend:
mindestens einen karosserieseitigen Befestigungsabschnitt (250), wobei ein Aufnahmeabschnitt (150) des Gleitelements (104) den karosserieseitigen Befestigungsabschnitt (250) wenigstens in einer gedachten Ebene, durch die die Gleitachse (G) verläuft, starr zu dem Gleitelement (104) festlegt.

6. Eine Komponente eines Kraftfahrzeugs, insbesondere eine Beleuchtungseinrichtung (400) des Kraftfahrzeugs, umfassend die Vorrichtung (100) gemäß einem der vorigen Ansprüche.

7. Die Komponente gemäß dem Anspruch 6, wobei die Gleitachse (G) im Wesentlichen parallel zur Fahrzeuglängsachse, insbesondere zur Fahrtrichtung, ist.

8. Die Komponente des Kraftfahrzeugs gemäß dem Anspruch 6 oder 7, wobei die wenigstens eine Vorrichtung (100) in Bezug zu dem Kraftfahrzeug nach innen gerichtet angeordnet ist.

9. Die Komponente des Kraftfahrzeugs gemäß dem Anspruch 8, wobei wenigstens eine weitere Vorrichtung zur Befestigung der Komponente in Bezug zu dem Kraftfahrzeug nach außen gerichtet angeordnet ist, und wobei die weitere Vorrichtung zur entlang der Gleitachse (G) starren Befestigung der Komponente an dem Kraftfahrzeug ausgebildet ist.

10. Ein Kraftfahrzeug umfassend die Komponente gemäß einem der Ansprüche 6 bis 9, wobei das Gleitelement (104) der Vorrichtung (100) zu einer Karosserie (260) des Kraftfahrzeugs im Wesentlichen starr festgelegt ist.
